# EUROPEAN PATENT APPLICATION

(11) **EP 3 812 482 A1**
(43) Date of publication of application: **28.04.2021**
(21) Application number: 19837478.7
(22) Date of filing: 10.06.2019
(51) Int. Cl.: C23C 20/06

(54) **METHOD FOR PREPARING GRAPHENE COATING ON THE SURFACE OF METAL**

(30) Priority: 17.07.2018 CN 201810781821
(71) Applicant: China Institute of Atomic Energy, Beijing 102413 (CN)
(72) Inventor: HAI, Zhengyin, Beijing 102413 (CN); TIAN, Guoxin, Beijing 102413 (CN); XU, Qian, Beijing 102413 (CN); XIN, Changsheng, Beijing 102413 (CN); YANG, Suliang, Beijing 102413 (CN); WANG, Hui, Beijing 102413 (CN)
(74) Representative: Isarpatent
(86) International application number: PCT/CN2019/090575
(87) International publication number: WO 2020/015475

(57) **Abstract**

A method of preparing a graphene coating on a metal surface, the method includes: pretreating the metal surface of a metal sample; immersing, spraying or hang brushing the metal sample with the pretreated metal surface by using a graphene oxide aqueous solution, so that the grapheme oxide aqueous solution covers inner and outer surfaces of the metal sample; baking and drying the metal sample covered with the graphene oxide aqueous solution; performing a microwave reduction treatment on the baked and dried metal sample; taking out the microwave-reduced metal sample, cleaning the metal sample with a cleaning agent to obtain a metal coated with the graphene coating.

## Description

### Technical Field

The present disclosure pertains to the technical field of reactor engineering, and in particular relates to a process of preparing a graphene coating on a metal surface.

### Background Art

With the development of national economy, the corrosion of high-tech equipment and precision devices such as nuclear power equipment, high-speed rail, aviation equipment, aerospace equipment, and electronic components has become a major factor affecting equipment performance and restricting equipment economy and safety. Preparation of coatings on the material surface may inhibit the corrosion of material and improve the temperature resistance of material. However, at present, the preparation of coatings has disadvantages such as complicated preparation equipment, high preparation cost, and great environmental hazard. If the coatings currently prepared are used in harsh environments for a long time, they will have the defect of poor performance. For example, the preparation of an anti-corrosion coating (zirconium alloy coating) on a surface of a reactor fuel cladding is one of the important directions for the development of high-performance fuel cladding, but there is no reliable technical means to prepare the anti-corrosion coating.

Graphene is a new type of two-dimensional material with excellent wear resistance and corrosion resistance. Application of graphene to metal surfaces to prepare protective coatings has good application prospects. At present, the method of preparing a graphene protective layer on a metal surface mainly adopts chemical vapor deposition, which has high temperature, inconvenient operation, and sometimes causes side reactions. For example, if a coating is prepared on an inner wall of a zirconium alloy, the chemical vapor deposition requires the introduction of hydrogen as the reaction condition, which will cause severe hydrogen embrittlement of the zirconium alloy. Therefore, it is necessary to seek a new method to avoid this defect.

### SUMMARY

According to the existing problems in the prior art, the present disclosure provides a method of coating graphene on a metal surface, especially on a surface of zirconium alloy, titanium alloy, and austenitic stainless steel. The method has the beneficial effects of no need to introduce hydrogen, simple operation, good coating compactness, and firm bonding between the coating and the substrate.

In order to solve the problems in the prior art, the present disclosure provides a method of preparing a graphene coating on a metal surface, including: pretreating the metal surface of a metal sample; immersing, spraying or hang brushing the metal sample with the pretreated metal surface by using a graphene oxide aqueous solution, so that the graphene oxide aqueous solution covers inner and outer surfaces of the metal sample; baking and drying the metal sample covered with the graphene oxide aqueous solution; performing a microwave reduction treatment on the baked and dried metal sample; taking out the microwave-reduced metal sample and cleaning the metal sample with a cleaning agent to obtain a metal coated with the graphene coating.

Preferably, pretreating the metal surface of the metal sample includes: immersing and ultrasonically cleaning the metal surface with a solvent, wherein the solvent includes one or more of acetone, ethanol, deionized water, ultrapure water, or alkaline solution.

Preferably, the solvent includes an ethanol solution and a potassium hydroxide solution. Immersing and ultrasonically cleaning the metal surface with the solvent includes: immersing the metal surface in the ethanol solution and performing a first ultrasonic cleaning; and immersing the metal surface after the first ultrasonic cleaning in the potassium hydroxide solution, and performing a second ultrasonic cleaning.

Preferably, the concentration of the potassium hydroxide solution is 0.1∼10 mol/L.

Preferably, the concentration of the potassium hydroxide solution is 0.8-1.5 mol/L.

Preferably, the solvent includes an ethanol solution and a sodium hydroxide solution. Immersing and ultrasonically cleaning the metal surface with the solvent includes: immersing the metal surface in the ethanol solution and performing the first ultrasonic cleaning; and immersing the metal surface after the first ultrasonic cleaning in the sodium hydroxide solution, and performing the second ultrasonic cleaning.

Preferably, the concentration of the sodium hydroxide solution is 0.1∼10 mol/L.

Preferably, the concentration of the sodium hydroxide solution is 0.8-1.5 mol/L.

Preferably, the number of graphene layers in the graphene oxide aqueous solution is 1∼100, and the mass fraction thereof is 0.1∼10 wt%.

Preferably, the number of graphene layers in the graphene oxide aqueous solution is 1∼10, and the mass fraction is 0.5-1.5 wt%.

Preferably, the immersion time for immersing the metal sample with the pretreated metal surface in the graphene oxide aqueous solution is 20∼100 minutes.

Preferably, when baking and drying the metal sample covered with the graphene oxide aqueous solution, the drying temperature is 40∼150 °C, the drying time is 30 minutes to 72 hours, and the drying environment is an environment of air, low pressure or inert gas protection.

Preferably, when baking and drying the metal sample covered with the graphene oxide aqueous solution, the drying temperature is 80 °C, the drying time is 2∼4 hours, and the drying environment is low pressure, wherein the low pressure range is 0.1 Pa or less.

Preferably, when performing the microwave reduction treatment, a reducing agent is ascorbic acid, hydrazine, sodium hydrogen borate or hydroiodic acid, the microwave power range is 500∼1000 W, the reduction temperature is 60∼190 °C, and the reduction time is 10 minutes to 1 hour. Performing the microwave reduction treatment on the baked and dried metal sample includes: placing the baked and dried metal sample into a container containing the reducing agent, and placing the container into a microwave device for microwave reduction.

Preferably, when performing the microwave reduction treatment, the reduction temperature is 90∼150 °C, the reduction time is 90 minutes, and a reducing agent is an ascorbic acid aqueous solution.

Preferably, the cleaning agent includes one or more of water, ethanol or acetone.

Preferably, the metal sample includes a zirconium alloy, a titanium alloy or an austenitic stainless steel.

Preferably, the shape of the metal sample includes a tube shape or a sheet shape.

Coating the surface of the metal sample using the method provided by the present disclosure avoids the disadvantages of high temperature, inconvenient operation and complex equipment caused by the traditional chemical vapor deposition of graphene coating, and especially avoids hydrogen embrittlement caused by the introduction of hydrogen in preparation of graphene coating on the surface of zirconium alloy using chemical vapor deposition. A metal with the graphene coating prepared by the method provided by the present disclosure has a high-temperature oxidation (corrosion) resistance performance improved by about 30% to 60%, and there is no significant change in the performance after 35keV electron beam irradiation for 2 hours. The graphene coating prepared by the method provided by the present disclosure has good uniformity (the thickness unevenness is less than 10%), good compactness (under the transmission electron microscope, there are no defects such as holes), and good bonding with the metal substrate (the coating cannot be peeled off by using methods such as high-temperature water immersion and filter paper wiping, and it can be destroyed only by sanding with sandpaper to destroy the substrate). Therefore, the firmness between the coating and the metal substrate can be ensured.

### BRIEF DESCRIPTION OF THE DRAWINGS

The drawings are used to provide a further understanding of the present disclosure and constitute a part of the specification. Together with the following detailed description, the drawings are used to explain the present disclosure, but do not constitute a limitation to the present disclosure. In the drawings:

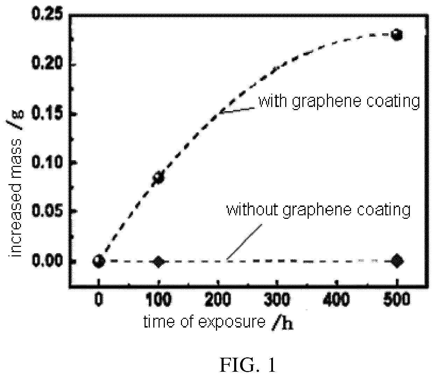

FIG. 1 is a schematic diagram of the corrosion protection performance of a graphene coating prepared on a stainless steel surface by using a method provided by the present disclosure.

### DETAILED DESCRIPTION

In order to make the purpose, technical solutions and advantages of the present disclosure clearer, the present disclosure will be further described in detail below in connection with specific embodiments and with reference to the drawings.

The technical solutions in the embodiments of the present disclosure will be described clearly and completely in conjunction with the drawings in the embodiments of the present disclosure. Obviously, the described embodiments are only a part of the embodiments of the present disclosure, rather than all the embodiments. Based on the embodiments in the present disclosure, all other embodiments obtained by those ordinary skilled in the art without making creative efforts fall within the protection scope of the present disclosure.

The present disclosure provides a method of preparing a graphene coating on a metal surface, including the following steps:
step 1: metal surface pretreatment
Immersing and ultrasonically cleaning the metal surface with a solvent, so as to remove surface impurities and oil stains;
step 2: choosing a graphene oxide aqueous solution with 1 to 100 layers and a mass fraction of 0.1∼10wt% to immerse, spray or hang brush the metal pretreated in step 1, so that the graphene oxide aqueous solution completely covers inner and outer surfaces of the metal sample;
Step 3: baking and drying the graphene-oxide-coated metal obtained in step 2;
Step 4: performing a microwave reduction treatment on the metal obtained in step 3, wherein the reducing agent is ascorbic acid, hydrazine, sodium hydrogen borate or hydroiodic acid, and the reducing agent is excessive; and wherein the microwave power range is 500∼1000 W, the reduction temperature is 60∼190 °C, and the reduction time is 10 minutes to 1 hour;
Step 5: taking out the microwave-reduced metal obtained in step 4, and cleaning it with a cleaning agent so as to obtain a metal coated with the graphene coating.

Preferably, the solvent in step 1 may be one or more of acetone, ethanol, deionized water, ultrapure water, or alkaline solution.

Preferably, the solvent in step 1 is an ethanol solution and a potassium hydroxide solution, and the cleaning sequence is first immersing in the ethanol solution and performing the first ultrasonic cleaning, and then immersing in the potassium hydroxide solution and performing the second ultrasonic cleaning, so as to remove surface oil stains and impurities.

Preferably, the solvent in step 1 is an ethanol solution and a sodium hydroxide solution, and the cleaning sequence is first immersing in the ethanol solution and performing the first ultrasonic cleaning, and then immersing in the sodium hydroxide solution and performing the second ultrasonic cleaning, so as to remove surface oil stains and impurities.

Preferably, the concentration of the potassium hydroxide solution is 0.1∼10 mol/L. The concentration is preferably 0.8-1.5 mol/L.

Preferably, the concentration of the sodium hydroxide solution is 0.1∼10 mol/L. The concentration is preferably 0.8-1.5 mol/L.

Preferably, the number of the graphene oxide layers is 1∼10, and the mass fraction thereof is 0.5-1.5 wt%.

Preferably, in the immersing of step 2, the immersion time is 20∼100 minutes.

Preferably, in the drying of step 3, the drying temperature is 40∼150 °C, the drying time is 30 minutes to 72 hours, and the drying environment is air, low pressure or inert gas protection environment.

Preferably, in the drying of step 3, the drying temperature is 80 °C, and the low-pressure drying time is 2∼4 hours, wherein the low-pressure range is 0.1 Pa or less.

Preferably, the specific process of the microwave reduction treatment in step 4 is to place the metal sample obtained in step 3 into a container containing a reducing agent, and place the container into a microwave device for microwave reduction.

Preferably, in the microwave reduction treatment of step 4, the reduction temperature is 90∼150 °C, the reduction time is 90 minutes, and the reducing agent is an ascorbic acid aqueous solution.

Preferably, the cleaning agent in step 5 is one or more of water, ethanol or acetone.

Preferably, the metal sample includes a zirconium alloy, a titanium alloy or an austenitic stainless steel.

Preferably, the shape of the metal sample is a tube shape, a sheet shape or the like.

The method provided by the present disclosure will be described in detail below through specific examples.

### Example 1

A method of coating a metal surface with a graphene coating is provided. The method includes the following steps:

### Step 1: metal surface pretreatment

Immersing and ultrasonically cleaning inner and outer surfaces of the metal surface with a solvent, so as to remove surface impurities and oil stains. The solvent may be one or more of acetone, ethanol, deionized water, ultrapure water, or alkaline solution. The solvent can be used to remove impurities and oil stains on the inner and outer surfaces of the metal, so that graphene oxide can be better adsorbed on the inner and outer surfaces of the metal sample.

Step 2: choosing a graphene oxide aqueous solution with 1∼10 layers and a mass fraction of 1.5 wt% to immerse the metal sample obtained in step 1 for 20 minutes, so that the graphene oxide aqueous solution completely covers the inner and outer surfaces of the metal sample.

Step 3: baking and drying the graphene-oxide-coated metal sample obtained in step 2. The drying temperature is 90 °C, the drying time is 24 hours, and the drying environment is an inert gas protection environment. At this temperature and drying time, the aqueous solution on the surface of the metal sample is completely volatilized.

Step 4: performing a microwave reduction treatment on the metal sample obtained in step 3. The specific operation is to place the metal sample obtained in step 3 into a container containing a reducing agent, and place the container into a microwave device for microwave reduction. The reducing agent is ascorbic acid, and the reducing agent is excessive. The microwave power range is 500 W, the reduction temperature is 80 °C, and the reduction time is 2 hours. This step is very important. Compared with the microwave reduction method without the reducing agent, the graphene and the metal substrate may be tightly bonded in this step under the action of the reducing agent and microwave.

Step 5: taking out the microwave-reduced metal sample obtained in step 4, and cleaning it with a cleaning agent, so as to obtain the metal sample coated with the graphene protective coating. The cleaning agent is water, ethanol and acetone.

In this example, the metal is a zirconium alloy, and the shape is a tube shape. After testing, the high-temperature oxidation (corrosion) resistance performance of the tubular zirconium alloy with graphene coating prepared using this example is improved by about 50%, and there is no significant change in performance after 35keV electron beam irradiation for 2 hours. The prepared graphene coating has good uniformity, and the thickness unevenness is 8%. The prepared graphene coating has good compactness and has no obvious defects such as holes under the transmission electron microscope. The prepared graphene coating has good bonding with the metal substrate. The coating cannot be peeled off by methods such as high-temperature water immersion and filter paper wiping, and it can be destroyed only by sanding with sandpaper to destroy the substrate.

### Example 2

The difference from Example 1 is that the solvent in step 1 is an ethanol solution and a potassium hydroxide solution, and the cleaning sequence is first immersing in the ethanol solution for 60 minutes and performing ultrasonic cleaning, and then immersing in the potassium hydroxide solution and performing ultrasonic cleaning, so as to remove surface oil stains and impurities. The step 1 removes the surface oil stains and impurities very thoroughly, ensuring that the graphene coating is successfully coated and the thickness unevenness of the coating is less than 5%. The concentration of the potassium hydroxide solution is 0.1 mol/L. In the step 2, a graphene oxide aqueous solution with 20∼50 layers and a mass fraction of 10 wt% is chosen to spray the metal sample. In step 3, the drying temperature is 40 °C, the drying time is 72 hours, and the drying environment is a low-pressure protection environment of 0.05 Pa. In step 4, the reducing agent is hydrazine, the microwave power range is 800 W, the reduction temperature is 60 °C, and the reduction time is 3 hours. In step 5, the cleaning agent is ethanol.

### Example 3

The difference from Example 1 is that the solvent in step 1 is an ethanol solution and a potassium hydroxide solution, and the cleaning sequence is first immersing in the ethanol solution for 40 minutes and performing ultrasonic cleaning, and then immersing in the potassium hydroxide solution and performing ultrasonic cleaning, so as to remove surface oil stains and impurities. The concentration of the sodium hydroxide solution is 0.8 mol/L. In step 2, a graphene oxide aqueous solution with 50∼100 layers and a mass fraction of 0.1 wt% is chosen to coat the metal sample in a hanging brush manner. In step 3, the drying temperature is 150 °C, the drying time is 30 hours, and the drying environment is air. In step 4, the reducing agent is sodium hydrogen borate, the reducing agent is ascorbic acid, hydrazine, sodium hydrogen borate or hydroiodic acid, the microwave power range is 1000 W, the reduction temperature is 190 °C, and the reduction time is 10 minutes. In step 5, the cleaning agent is acetone.

### Example 4

The difference from Example 1 is that the solvent in step 1 is an ethanol solution and a potassium hydroxide solution, and the cleaning sequence is first immersing in the ethanol solution and performing ultrasonic cleaning, and then immersing in the potassium hydroxide solution and performing ultrasonic cleaning, so as to remove surface oil stains and impurities. The concentration of the potassium hydroxide solution is 1.5 mol/L. The reducing agent in step 4 is hydroiodic acid, and the cleaning agent in step 5 is water.

### Example 5

The difference from Example 1 is that the solvent in step 1 is an ethanol solution and a potassium hydroxide solution, and the cleaning sequence is first immersing in the ethanol solution and performing ultrasonic cleaning, and then immersing in the potassium hydroxide solution and performing ultrasonic cleaning, so as to remove surface oil stains and impurities. The concentration of the sodium hydroxide solution is 10 mol/L.

### Example 6

The difference from Example 1 is that the solvent in step 1 is an ethanol solution and a potassium hydroxide solution, and the cleaning sequence is first immersing in the ethanol solution and performing ultrasonic cleaning, and then immersing in the potassium hydroxide solution and performing ultrasonic cleaning, so as to remove surface oil stains and impurities. The concentration of the potassium hydroxide solution is 1.5 mol/L.

### Example 7

The difference from Example 1 is that the solvent in step 1 is an ethanol solution and a sodium hydroxide solution, and the cleaning sequence is first immersing in the ethanol solution and performing ultrasonic cleaning, and then immersing in the sodium hydroxide solution and performing ultrasonic cleaning, so as to remove surface oil stains and impurities. The concentration of the potassium hydroxide solution is 1.5 mol/L. In step 2, a graphene oxide aqueous solution with 50∼100 layers and a mass fraction of 0.1 wt% is chosen, and the metal sample is immersed for 50 minutes to coat the inner and outer surfaces of the metal with graphene.

### Example 8

The difference from Example 1 is that the solvent in step 1 is an ethanol solution and a sodium hydroxide solution, and the cleaning sequence is first immersing in the ethanol solution and performing ultrasonic cleaning, and then immersing in the sodium hydroxide solution and performing ultrasonic cleaning, so as to remove surface oil stains and impurities. The concentration of the sodium hydroxide solution is 0.8 mol/L.

### Example 9

A method of coating a metal surface with a graphene coating is provided. The method includes the following steps:

### Step 1: metal surface pretreatment

Immersing and ultrasonically cleaning inner and outer surfaces of the metal sample with a solvent, so as to remove surface impurities and oil stains. The solvent may be one or more of acetone, ethanol, deionized water, ultrapure water, or alkaline solution.

Step 2: choosing a graphene oxide aqueous solution with 1∼10 layers and a mass fraction of 5 wt% to immerse the metal sample obtained in step 1 for 40 minutes or to spray or hang brush the metal sample, so that the graphene oxide aqueous solution completely covers the inner and outer surfaces of the metal sample.

Step 3: baking and drying the grapheme-oxide-coated metal sample obtained in step 2. The drying temperature is 100 °C, the drying time is 30 hours, and the drying environment is an inert gas protection environment.

Step 4: performing a microwave reduction treatment on the metal sample obtained in step 3. The specific operation is to place the metal sample obtained in step 3 into a container containing a reducing agent, and place the container into a microwave device for microwave reduction. The reducing agent is ascorbic acid, and the reducing agent is excessive. The microwave power range is 800 W, the reduction temperature is 90 °C, and the reduction time is 2 hours.

Step 5: taking out the microwave-reduced metal sample obtained in step 4, and cleaning it with a cleaning agent, so as to obtain the metal sample coated with the graphene protective coating. The cleaning agent is water, ethanol and acetone.

In this example, the metal is an austenitic stainless steel, and the shape is a tube shape. After testing, the high temperature oxidation (corrosion) resistance performance of the tubular austenitic stainless steel with the graphene coating prepared using this example is improved by about 45%. As shown in FIG. 1, when there is no graphene coating, as the extension of the time of exposure to high temperature and corrosive environment, the mass of the coating will increase due to oxidation. When there is the coating, this phenomenon can be effectively improved. The prepared tubular austenitic stainless steel with the graphene coating was irradiated with 35keV electron beam for 2 hours, and there was no significant change in performance. The prepared graphene coating has good uniformity, and the thickness unevenness is 8%. The prepared graphene coating has good compactness and has no obvious defects such as holes under the transmission electron microscope. The prepared graphene coating has good bonding with the metal substrate. The coating cannot be peeled off by methods such as high-temperature water immersion and filter paper wiping, and it can be destroyed only by sanding with sandpaper to destroy the substrate.

### Example 10

A method of coating a metal surface with a graphene coating is provided. The method includes the following steps:

### Step 1: metal surface pretreatment

Immersing and ultrasonically cleaning inner and outer surfaces of the metal surface with a solvent, so as to remove surface impurities and oil stains. The solvent is an ethanol solution and a potassium hydroxide solution, and the cleaning sequence is first immersing in the ethanol solution and performing ultrasonic cleaning, and then immersing in the potassium hydroxide solution and performing ultrasonic cleaning, so as to remove surface oil stains and impurities. The concentration of the potassium hydroxide solution is 1.5 mol/L.

Step 2: choosing a graphene oxide aqueous solution with 1∼10 layers and a mass fraction of 3 wt% to immerse the metal sample obtained in step 1 for 40 minutes or to spray or hang brush the metal sample, so that the graphene oxide aqueous solution completely covers the inner and outer surfaces of the metal sample.

Step 3: Baking and drying the grapheme-oxide-coated metal sample obtained in step 2. The drying temperature is 100 °C, the drying time is 30 hours, and the drying environment is an inert gas protection environment.

Step 4: Performing a microwave reduction treatment on the metal sample obtained in step 3. The specific operation is to place the metal sample obtained in step 3 into a container containing a reducing agent, and place the container into a microwave device for microwave reduction. The reducing agent is ascorbic acid, and the reducing agent is excessive. The microwave power range is 800 W, the reduction temperature is 90 °C, and the reduction time is 2 hours.

Step 5: Taking out the microwave-reduced metal sample obtained in step 4, and cleaning it with a cleaning agent, so as to obtain the metal sample coated with the graphene protective coating. The cleaning agent is water, ethanol and acetone.

In this example, the metal is a titanium alloy, and the shape is a sheet shape. After testing, the high-temperature oxidation (corrosion) resistance performance of the sheet-like titanium alloy with the graphene coating prepared using this example is improved by about 60%, and there is no significant change in performance after 35keV electron beam irradiation for 2 hours. The prepared graphene coating has good uniformity, and the thickness unevenness is 6%. The prepared graphene coating has good compactness and has no obvious defects such as holes under the transmission electron microscope. The prepared graphene coating has good bonding with the metal substrate. The coating cannot be peeled off by methods such as high-temperature water immersion and filter paper wiping, and it can be destroyed only by sanding with sandpaper to destroy the substrate.

## Claims

1. A method of preparing a graphene coating on a metal surface, **characterized in that** the method comprises:
pretreating the metal surface of a metal sample;
immersing, spraying or hang brushing the metal sample with the pretreated metal surface by using a graphene oxide aqueous solution, so that the graphene oxide aqueous solution covers inner and outer surfaces of the metal sample;
baking and drying the metal sample covered with the graphene oxide aqueous solution;
performing a microwave reduction treatment on the baked and dried metal sample;
taking out the microwave-reduced metal sample and cleaning the metal sample with a cleaning agent to obtain a metal coated with the graphene coating.

2. The method according to claim 1, **characterized in that**:
pretreating the metal surface of the metal sample comprises: immersing and ultrasonically cleaning the metal surface with a solvent,
wherein the solvent comprises one or more of acetone, ethanol, deionized water, ultrapure water, or alkaline solution.

3. The method according to claim 2, **characterized in that**: the solvent comprises an ethanol solution and a potassium hydroxide solution, and immersing and ultrasonically cleaning the metal surface with the solvent comprises:
immersing the metal surface in the ethanol solution, and performing a first ultrasonic cleaning; and
immersing the metal surface after the first ultrasonic cleaning in the potassium hydroxide solution, and performing a second ultrasonic cleaning.

4. The method according to claim 3, **characterized in that** the concentration of the potassium hydroxide solution is 0.1∼10 mol/L.

5. The method according to claim 4, **characterized in that** the concentration of the potassium hydroxide solution is 0.8-1.5 mol/L.

6. The method according to claim 2, **characterized in that** the solvent comprises an ethanol solution and a sodium hydroxide solution, and immersing and ultrasonically cleaning the metal surface with the solvent comprises:
immersing the metal surface in the ethanol solution, and performing a first ultrasonic cleaning; and
immersing the metal surface after the first ultrasonic cleaning in the sodium hydroxide solution, and performing a second ultrasonic cleaning.

7. The method according to claim 6, **characterized in that** the concentration of the sodium hydroxide solution is 0.1∼10 mol/L.

8. The method according to claim 7, **characterized in that** the concentration of the sodium hydroxide solution is 0.8-1.5 mol/L.

9. The method according to claim 1, **characterized in that** the number of graphene layers in the graphene oxide aqueous solution is 1∼100, and a mass fraction thereof is 0.1∼10 wt%.

10. The method according to claim 9, **characterized in that** the number of graphene layers in the graphene oxide aqueous solution is 1∼10, and the mass fraction thereof is 0.5-1.5 wt%.

11. The method according to claim 1, **characterized in that** immersion time for immersing the metal sample with the pretreated metal surface in the graphene oxide aqueous solution is 20∼100 minutes.

12. The method according to claim 1, **characterized in that**: when baking and drying the metal sample covered with the graphene oxide aqueous solution, the drying temperature is 40∼150 °C, the drying time is 30 minutes to 72 hours, and the drying environment is an environment of air, low pressure or inert gas protection.

13. The method according to claim 12, **characterized in that**: when baking and drying the metal sample covered with the graphene oxide aqueous solution, the drying temperature is 80 °C, the drying time is 2∼4 hours, and the drying environment is low pressure, wherein the low pressure range is 0.1 Pa or less.

14. The method according to claim 1, **characterized in that**:
when performing the microwave reduction treatment, a reducing agent is ascorbic acid, hydrazine, sodium hydrogen borate or hydroiodic acid, the microwave power range is 500∼1000 W, the reduction temperature is 60∼190 °C, and the reduction time is 10 minutes to 1 hour;
performing a microwave reduction treatment on the baked and dried metal sample comprises: placing the baked and dried metal sample into a container containing the reducing agent, and placing the container into a microwave device for microwave reduction.

15. The method according to claim 1, **characterized in that**: when performing the microwave reduction treatment, the reduction temperature is 90∼150 °C, the reduction time is 90 minutes, and a reducing agent is an ascorbic acid aqueous solution.

16. The method according to claim 1, **characterized in that** the cleaning agent comprises one or more of water, ethanol or acetone.

17. The method according to claim 1, **characterized in that** the metal sample comprises a zirconium alloy, a titanium alloy or an austenitic stainless steel.

18. The method according to claim 1, **characterized in that** a shape of the metal sample comprises a tube shape or a sheet shape.
